# EUROPEAN PATENT APPLICATION

(11) **EP 2 284 407 A2**
(43) Date of publication of application: **16.02.2011**
(21) Application number: 09762610.5
(22) Date of filing: 29.05.2009
(51) Int. Cl.: F16B 35/00, B21K 1/56, B21H 3/02, F16B 33/00

(54) **SCREW AND A METHOD FOR MANUFACTURING THE SAME**

(30) Priority: 11.06.2008 KR 20080054521; 30.07.2008 KR 20080010196 U; 17.02.2009 KR 20090001739 U
(71) Applicant: Asia Bolt Co., Ltd., Incheon 425-805 (KR)
(72) Inventor: WOO, Beong-taek, Incheon 402-706 (KR)
(74) Representative: Strych, Werner Maximilian Josef
(86) International application number: PCT/KR2009/002862
(87) International publication number: WO 2009/151223

(57) **Abstract**

The present invention relates to a screw used for connecting a hard disk drive cover to a steel plate and a method for manufacturing the same. In conventional joints, the tightening force gets weaker when the threaded portion is shorter then the length of the screw because there is an un-threaded portion below the full length of the screw. To solve such problems, a screw is provided which has a head formed on one end and a threaded portion formed on the outer circumferential surface of the other side, wherein the threaded portion has a uniform outer diameter, and an edge intersecting the axial direction is formed on the front end of the threaded portion. The manufacturing method comprises: forming a head by forging and cutting a wire-shape material; roll-forming a threaded portion with stationary and movable dies on the outer circumferential surface of a body with the head formed thereon; and cutting the threaded portion to a predetermined length with a cutting edge formed on the roll-formed, stationary and movable dies. Accordingly, when the screw is fastened to a low-height female threaded portion of a target object, the fastening action is facilitated and the defect rate is reduced to a minimum, and this provides improved productivity, lower costs and increased joint force.

## Description

### [Technical Field]

The present disclosure relates to a screw and a method of manufacturing the same, and more particularly, to a screw for connecting a hard disk drive cover to a steel plate or the like and a method for manufacturing the same.

### [Background Art]

A hard disk drive (HDD) is a data storage device that is mounted in a main body of a computer or the like. HDDs are electromechanical devices that store digital signals in the form of semi-permanent magnetic charges. Since the HDD is capable of inputting and outputting a great quantity of data at high speed, it has been widely used as a storage device of a computer system or the like.

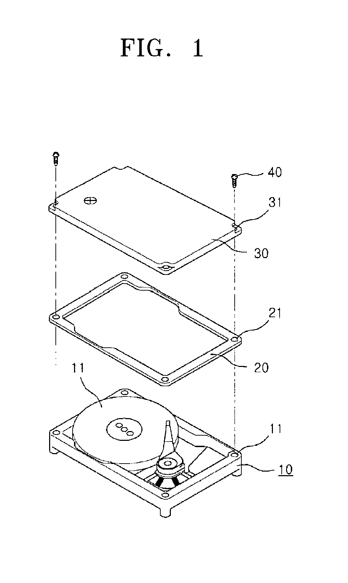

As shown in Fig. 1, such an HDD includes a main body 10 and a cover 30 coupled to the main body 10 with a gasket 20 interposed therebetween, wherein the main body 10 is provided with a plurality of female threaded portions 11, and the gasket 20 and the cover 30 are provided at positions corresponding to the threaded portions 11 with through-holes 21, 31 through which screws 40 are fastened to the main body 10.

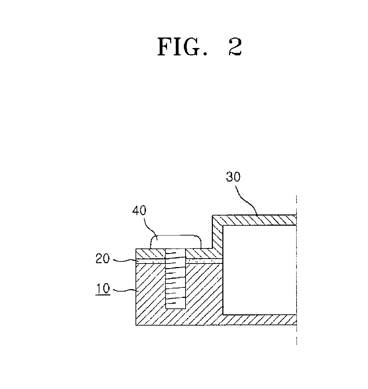

Accordingly, when assembling the components of the HDD, such as a spindle motor, actuator, head, disk, etc., mounted in the main body 10 using the screws 40, the cover 30 is placed on the main body 10 with the gasket 20 interposed therebetween, and the cover 30, gasket 20 and main body 10 are coupled to one another by fastening the screws 40 through the through-holes 21, 31 and the female threaded portions 11, as shown in Fig. 2.

However, due to the vulnerability of precision devices to foreign substances, the female threaded portions 11, which are formed in the HDD or at edges of the main body 10, are not cut using a cutting tap but are roll-formed using a rolling tap, thereby inevitably leaving a groove 11 a in a screw thread of the female threaded portion 11 during machining.

The conventional screw 40 has a complete external threaded portion 41 and an incomplete external threaded portion 42 having a smaller diameter and formed on a leading end of the complete external threaded portion, so that when the screw 40 is fastened into the female threaded portion 11, the incomplete threaded portion 42 is coupled into the groove 11a in the screw thread of the female threaded portion 11, causing a fastening defect, which leads to low productivity, cost increase and lower joint force.

Further, since the leading end of the conventional screw extends straight forward, the screw is not sufficiently fastened into the female threaded portion, thereby causing a fastening defect.

The conventional screw is manufactured by roll-forming because it is difficult to machine the screw and productivity is considerably reduced.

Roll-forming of a smaller diameter and length screw is carried out by machining a target object into a certain shape, placing the machined target object between threaded dies and subjecting the machined target object to force to move any one of the dies. In contrast to the cutting process, roll-forming provides advantages such as reduced process time, denser metal structure providing improved strength, and the like.

In particular, when screws are formed by roll-forming, a reciprocation type method is usually adopted in which a planar metal die is moved. When high precision screw or special screws are formed by shaping or machining, cylindrical roll type dies are used.

In manufacturing a screw, a rod-shaped material is roll-formed between an upper die and a lower die. Here, the screw is formed at a leading cut thereof with a thin, sharp fin, which entails a risk of worker injury and also makes it difficult or even impossible to fasten the screw to a female threaded portion.

### [Disclosure]

### [Technical Problem]

One aspect of the present disclosure provides a screw which can be easily fastened to a female threaded portion of a target object with improved joint force even when the female threaded portion has a low depth, and a method of manufacturing the same.

Another aspect of the present disclosure provides a screw which permits easy manufacture, improved productivity and reduced manufacturing costs, and a method of manufacturing the same.

A further aspect of the present disclosure provides a screw which eliminates a fin, which is generally formed at an edge cut of the screw upon roll-forming, thereby providing a clean appearance and preventing a worker from being injured by the fin, and a method of manufacturing the same.

### [Technical Solution]

In accordance with one aspect, a screw includes: a head at one end thereof; and a threaded portion on an outer circumferential surface of the other side of the screw, wherein the threaded portion has a uniform outer diameter and is formed at a leading end thereof with an edge cut intersecting an axial direction of the screw.

In accordance with another aspect, a method of manufacturing a screw includes: forming a head by forging and cutting a wire-shape material; roll-forming a threaded portion with stationary and movable dies on an outer circumferential surface of a body having the head formed thereon; and cutting the roll-formed threaded portion to a predetermined length using cutting edges formed on the stationary and movable dies.

### [Advantageous Effects]

According to embodiments of the present disclosure, an incomplete threaded portion is eliminated from the screw, and the threaded portion is formed at a leading end thereof with a guide portion and has a uniform outer diameter, thereby facilitating a fastening action of the screw and minimizing defect rate when the screw is fastened to a low-height female threaded portion of a target object. Consequently, the screw according to the embodiments provides improved productivity, lower costs, and higher joint force.

Further, the screw having the threaded portion on the circumferential surface thereof and cut to a predetermined length may be subjected to re-roll forming to form a smooth circumferential surface of the threaded portion, thereby providing a clean appearance and preventing worker injury.

### [Description of Drawings]

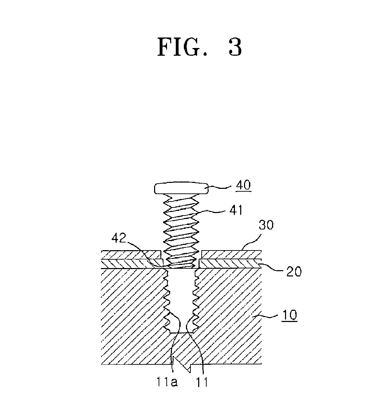

Figs. 1 to 3 illustrate a fastening state of a conventional screw, wherein
Fig. 1 is an exploded perspective view of the conventional screw fastened to a computer hard disk,
Fig. 2 is an enlarged cross-sectional view of the conventional screw fastened to the hard disk, and
Fig. 3 is a cross-sectional view of the conventional screw with a fastening defect;
Fig. 4 is a front view of a screw according to an exemplary embodiment of the present disclosure;
Fig. 5 is a block diagram illustrating a procedure of a method of manufacturing a screw according to an exemplary embodiment of the present disclosure;
Figs. 6 to 8 illustrate dies for manufacturing the screw according to one exemplary embodiment of the present disclosure, wherein

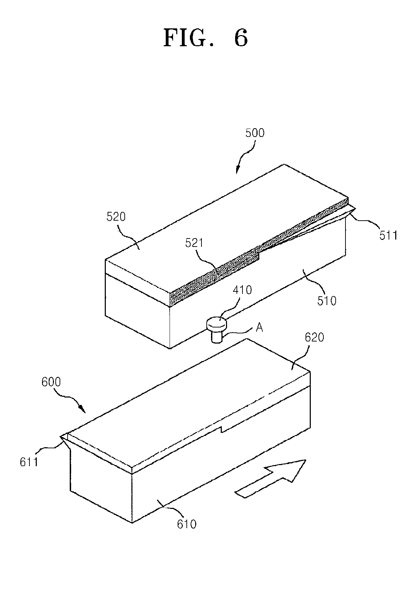

Fig. 6 is a perspective view of the dies,

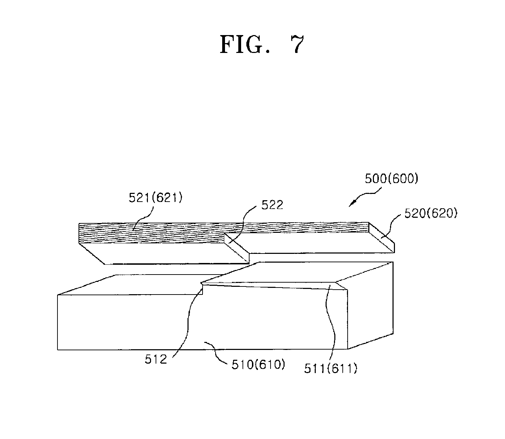

Fig. 7 is a perspective view of the dies combined to each other, and

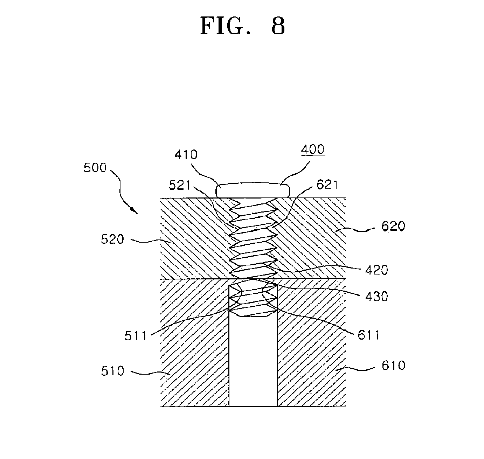

Fig. 8 is a partially enlarged cross-sectional view of the screw manufactured by the method according to the exemplary embodiment;

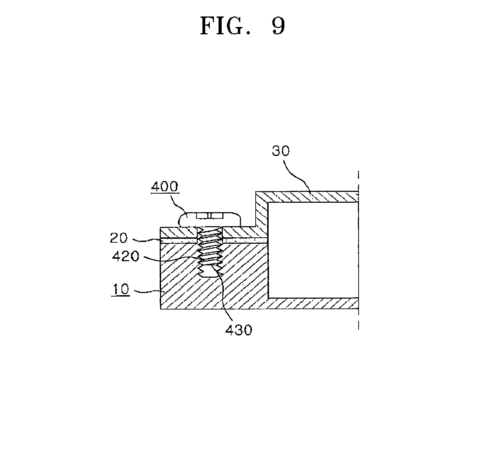

Fig. 9 is a partially enlarged cross-sectional view of the screw manufactured by the method according to the exemplary embodiment in a fastened state;

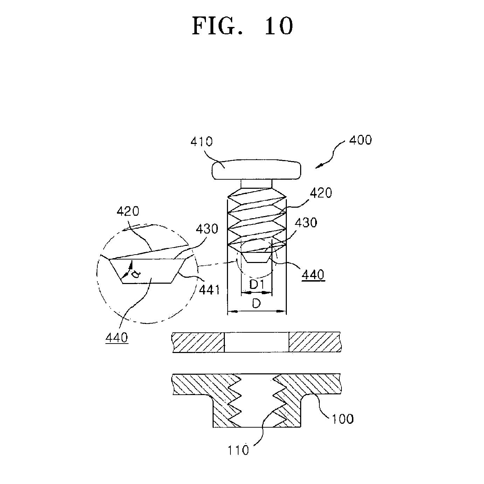

Figs. 10 to 14 illustrate a screw according to another exemplary embodiment of the present disclosure, wherein
Fig. 10 is a front view of an example of a screw and a target object to which the screw is fastened,

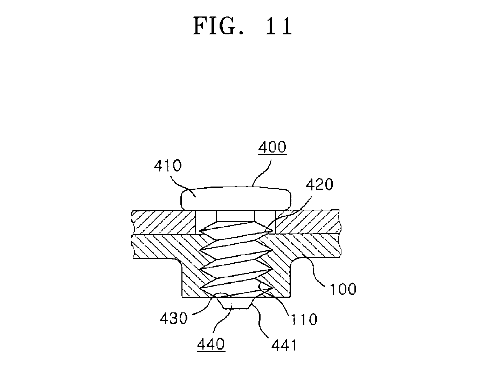

Fig. 11 is a view of the screw fastened to the target object in Fig. 10,

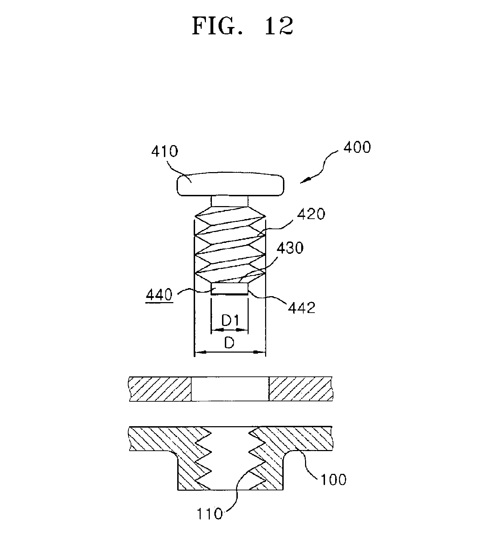

Fig. 12 is a front view of a modified example of the screw and the target object to which the screw is fastened,

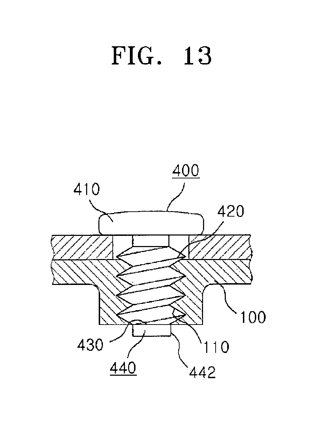

Fig. 13 is a view of the screw fastened to the target object in Fig. 12, and

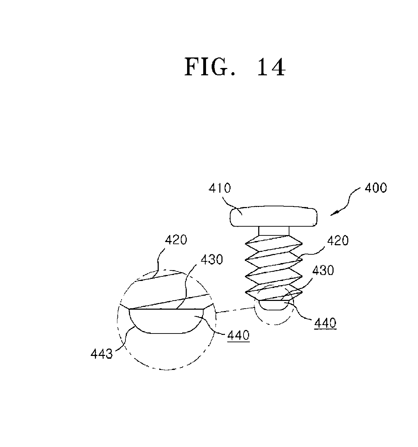

Fig. 14 is a front view of another modified example of the screw;

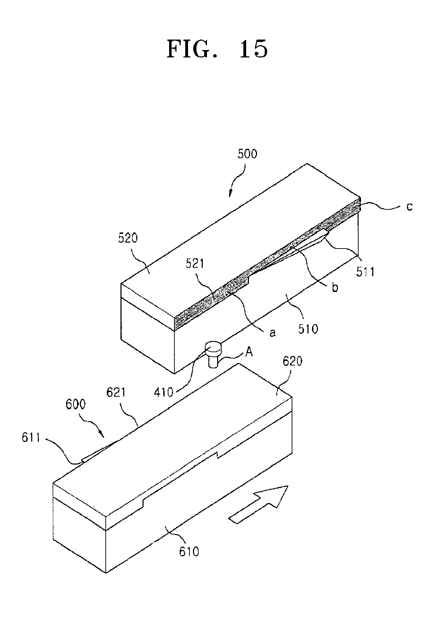

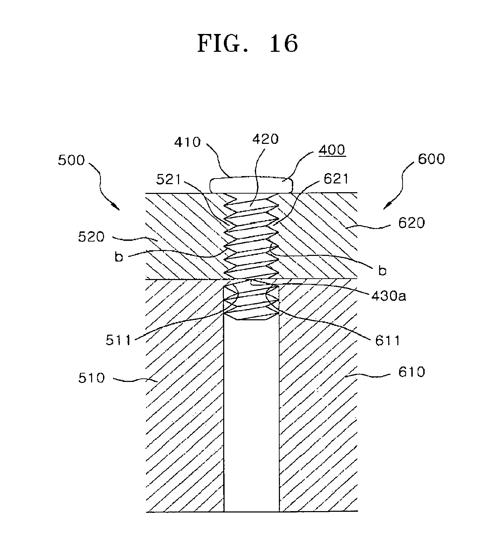

Figs. 15 and 16 illustrate dies for manufacturing a screw according to another exemplary embodiment of the present disclosure, wherein
Fig. 15 is a perspective view of the dies, and
Fig. 16 is a partial cross-sectional view of the screw manufactured by the dies and cut at a lower portion thereof; and

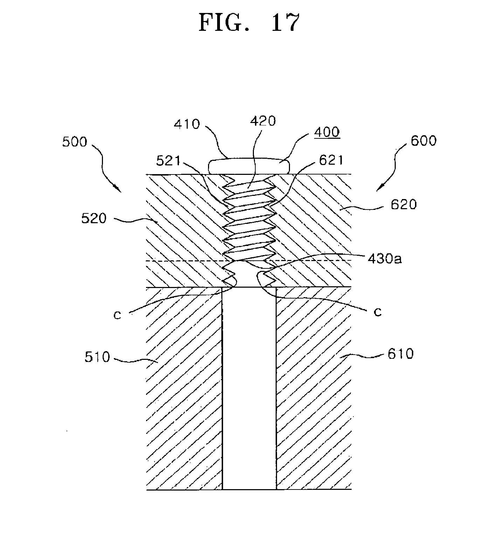

Fig. 17 is a partially enlarged cross-sectional view of the lower portion of the screw subjected to re-roll forming.

### [Best Mode]

Exemplary embodiments of the present disclosure will now be described in detail with reference to the accompanying drawings.

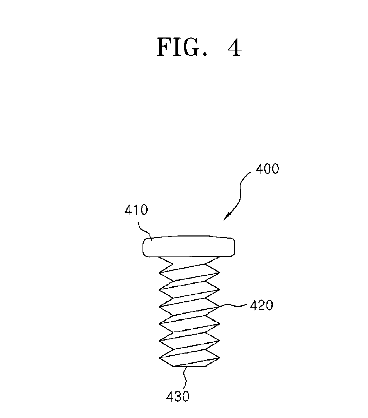

Fig. 4 shows a screw according to an exemplary embodiment of the present disclosure, wherein the screw 400 includes a head 410 formed at one end thereof and a complete threaded portion 420 on the other side thereof. The threaded portion 420 has a uniform outer diameter and is formed at a leading end thereof with an edge cut 430 that is formed in a linear fashion perpendicular to an axial direction of the screw.

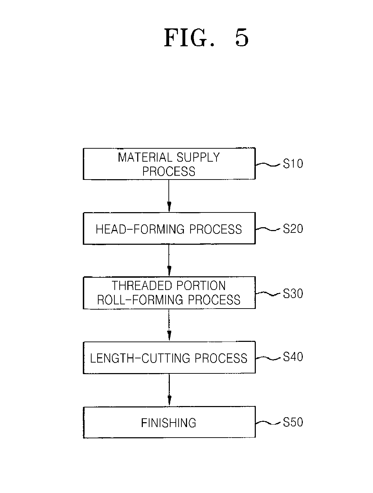

Next, a method of manufacturing the screw will be described with reference to Fig. 5.

The method includes supplying a wire-shaped material such as a steel wire in S10, forging the material to form a screw preform A having a head 410 in S20, roll-forming an outer circumferential surface of the screw preform A having the head 410 to form a threaded portion 420 thereon in S30, cutting the threaded screw perform A to a predetermined length in S40, and finishing the cut screw preform A to form a final screw 400 in S50.

Specifically, when the wire-shaped material is supplied in S10, the material is forged and cut to a predetermined length by pre-machined dies of a forging machine to form the screw preform A having the head 410 at one end thereof, in S20.

Then, in S30, the screw preform is roll-formed by a pair of dies, i.e. stationary and movable dies 500, 600, which are located to face each other, as shown in Figs. 6 and 7, to form the threaded portion 420 on the outer circumferential surface of the screw preform A.

The stationary die 500 is composed of a lower die section 510 and an upper die section 520 coupled to the lower die section 510. The movable die 600 is also composed of a lower die section 610 and an upper die section 620 coupled to the lower die section 610. The stationary and movable dies 500, 600 are held in a holder, which is not shown in the drawings, so as to machine the threaded portion 420.

The lower die sections 510, 610 are provided at one side of upper portions thereof with cutting edges 511, 611 that protrude to face each other, and the upper die sections 520, 620 are provided at one side thereof with thread-forming portions 521, 621 that face each other to form the threaded portion 420.

The cutting edges 511, 611 are formed on front sides of the upper portions of the lower die sections 510, 610 to face each other, have a gentle gradient as seen in a plan view, and also have cutter portions at their leading ends to cut the screw 400 to a predetermined length.

The lower die section 510 (610) and the upper die section 520 (620) have contact steps 512, 522 that are oppositely provided and come into contact with each other when the lower and upper die sections are combined with each other, thereby preventing the upper and lower die sections from slipping out of place during machining.

Then, when the screw preform machined to have the head 410 in the previous operation is supplied between the stationary and movable dies 500, 600, the screw preform is machined to have the threaded portion 420 on its outer circumferential surface by the action of the movable die 600 moved in an arrow direction in Fig. 6 by means of a separate drive unit such as a cylinder relative to the stationary die 600.

Specifically, as shown in Fig. 8, when the screw preform having the head 410 formed in the previous operation is supplied between the stationary die 500 and the movable die 600, the movable die 600 moves to one side and presses the screw preform to form the threaded portion on the outer circumferential surface thereof. At the same time, the threaded screw is cut to a predetermined length by the cutting edges 511, 611, which are placed at a position corresponding to the predetermined length of the screw, finally forming a screw 400 having an edge cut 430 at the leading end thereof.

The cut length of the screw 400 is determined by a distance from the upper portions of the upper die sections 520, 620 to the cutting edges 511, 611, that is, the upper portions of the lower die sections 510, 610, which is preset by taking the length of the screw 400 into consideration when manufacturing the dies.

The threaded portion 420 of the screw 400 has a uniform outer diameter.

Referring to as Fig. 9, a final screw for hard disk drives includes the threaded portion 420 having a uniform outer diameter and the edge cut 430 at the leading end of the threaded portion, so that when the screw 400 is fastened to a female threaded portion 11 of a main body 10 of a hard disk drive through a gasket 20 and a cover 30, the threaded portion 420 is not coupled into the a groove 11a of the female threaded portion 11 unlike a conventional screw, thereby reducing fastening defects while improving fastening force.

Further, through interaction between the stationary and movable dies 500, 600, the threaded portion 420 is formed on the outer circumferential surface of the screw 400 and at the same time the screw is cut to a predetermined length by the cutting edges 511, 611, simplifying the manufacturing process and thereby improving yield and reducing manufacturing costs.

The screw according to the embodiments is not limited to the configuration wherein the edge cut 430 is formed in a linear fashion perpendicular to the axial direction of the screw 400. In an alternative embodiment, the screw may have a guide portion 440 formed on the edge cut at the lower leading end of the threaded portion 420 to facilitate fastening of the screw to a female threaded portion 110 of a target object 100 made of steel, as shown in Figs. 10 and 11.

The guide portion 440 may have a trapezoidal step having inclined side faces 441, a diameter of which decreases from an upper side to a lower side thereof.

The upper portion of the trapezoidal step, i.e. the lower leading end of the threaded portion 420, may have a length that is equal to or smaller than a root diameter D1 of the threaded portion 420.

An angle between the inclined side face 441 and the lower leading end of the threaded portion 420 may be 30 to 60 degrees.

The screw according to the embodiments is not limited to the configuration wherein the guide portion has the trapezoidal step having the inclined side faces 411. In an alternative embodiment, the guide portion may be formed with a rectangular step having linear side faces 442 which extend in the axial direction of the screw, as shown in Figs. 12 and 13.

The diameter of the rectangular step may be equal to or smaller than a root diameter D1 of the screw.

Further, as shown in Fig. 14, the guide portion 440 may have a step with rounded corners 443 at the leading end thereof so that the threaded portion 420 of the screw 400 can be easily inserted into the female threaded portion 110.

With the construction of the trapezoidal guide portion 440 formed on the edge cut 430 and having the inclined side faces 441, the threaded portion 420 can be easily guided into and fastened to the female threaded portion 110 of the target object 100, as shown in Fig. 11, when the screw 400 is fastened to the target object 100 from an upper side.

Further, with the construction of the rectangular guide portion 440 formed on the edge cut 430 of the screw 400 and having linear side faces 442, the threaded portion 420 can be easily and smoothly fastened to the female threaded portion 110 of the target object 100, as shown in Fig. 13.

Furthermore, with the construction of the guide portion 440 formed on the edge cut 430 of the screw 400 and having the rounded corners 443, the threaded portion 420 can also be easily fastened to the female threaded portion 110 of the target object 100, as shown in Fig. 14.

Accordingly, upon fastening of the screw 400, fastening defects resulting from incorrect fitting between the threaded portion 420 and the female threaded portion 110 are prevented.

Figs. 15 to 17 illustrate the stationary and movable dies 500, 600 for manufacturing the screw according to the embodiment.

Referring to the drawings, the stationary and movable dies 500, 600 have the lower die sections 510, 610 and the upper die sections 520, 620, which are combined with one another.

The lower die sections 510, 610 are formed at opposite surfaces thereof with cutting edges 511, 611 that protrude to cut the screw 400 to a predetermined length.

The cutting edges 511, 611 protrude increasingly outwards and have sharp leading ends to cut the screw 400 that rolls between the dies.

The upper die sections 520, 620 are provided with thread-forming portions 521, 621 that face each other to form the threaded portion on the outer circumferential surface of the screw 400.

Each of the thread-forming portions 521, 621 includes a pre-forming section (a), a main-forming section (b), and a finishing section (c) formed in series.

The pre-forming section (a) pre-forms a thread on the outer circumferential surface of the screw preform A. The main-forming section (b) completes forming of the thread on the circumferential surface of the screw 400, and also cuts the screw to a predetermined length to form the edge cut 430a at the leading end of the screw using the cutting edges 511, 611. The finishing section (c) is re-rolled along the outer circumferential surface of the screw 400 to smooth the surface thereof.

The height of the finishing section (c) may be greater than that of the main-finishing section (b).

Even when a certain portion protrudes circumferentially from the edge cut 430 after the screw 400 is cut to a predetermined length by the cutting edges 511, 611, or where the screw 400 is inserted between the upper die sections 520, 620 and the lower die sections 510, 620 to form a fin, the surface of the screw is smoothed via re-rolling.

Thus, it is possible to protect a worker from injury or to prevent insufficient fastening of the screw to the female threaded portion due to a fin, which can be formed on the leading end of the screw after roll-forming.

According to the embodiment, the screw is machined to form the threaded portion y roll-forming using the stationary and movable dies 500, 600 that are located to face each other.

That is, by moving the movable die 600 relative to the stationary die 500 after the screw preform A having the head is placed between the stationary and movable dies 500, 600, the screw preform is machined to have a threaded portion on the outer circumferential surface of the screw through interaction between the opposite thread-forming portions 521, 621.

Specifically, when the outer circumferential surface of the screw preform A comes into contact with the thread-forming portions 521, 621, the screw preform is machined to first pre-form the thread at the pre-forming section (a) and the screw preform is then machined to complete formation of the thread at the main-forming section (b), as shown in Fig. 16, and at the same time is cut to a predetermined length through interaction between the cutting edges 511, 611, thereby forming the linear edge cut 430a on the leading end of the threaded portion.

Then, as shown in Fig. 17, the threaded screw 400 of a predetermined length passes through the finishing section (c) to form a smooth surface of the threaded portion, thereby removing a fin which can be created due to either a gap between the lower die sections 510, 610 and the upper die sections 520, 620, or cutting operation.

### [Industrial Applicability]

The present disclosure is applicable to screws that couple components of a hard disk drive, such as a spindle motor, disk, actuator, head, etc., to a cover, screws that couple components and a thin metal or plastic product, or screws or bolts that have a threaded portion having a uniform outer diameter, or a manufacturing method thereof. The present disclosure is also applicable to any kind of screw that has a complete threaded portion and can be fastened to a female threaded portion of a thin target object made of steel.

## Claims

1. A screw comprising:
a head at one end thereof and a threaded portion formed on an outer circumferential surface of the other side of the screw,
wherein the threaded portion has a uniform outer diameter and is formed at a leading end thereof with an edge cut intersecting an axial direction of the screw.

2. The screw of claim 1, wherein the edge cut further has a guide portion for easy fastening into a female threaded portion of a target object.

3. The screw of claim 2, wherein the guide portion is a step of a trapezoidal section, a diameter of which gradually decreases from one side to the other side.

4. The screw of claim 2, wherein the guide portion is a step of a rectangular section having the same diameter.

5. The screw of claim 4, wherein the step has rounded corners.

6. A method of manufacturing a screw, comprising:
forming a head by forging and cutting a wire-shape material;
roll-forming a threaded portion with stationary and movable dies on an outer circumferential surface of a body having the head thereon; and
cutting the roll-formed threaded portion to a predetermined length using cutting edges formed on the stationary and movable dies.

7. The method of claim 6, wherein the stationary and movable dies include lower die sections having cutting edges on opposite surfaces of the lower die sections for cutting the screw to a predetermined length, respectively, and upper die sections coupled onto the lower die sections and having thread-forming portions for roll-forming the threaded portion.

8. The method of claim 7, wherein the thread-forming portion of each of the upper die sections has a finishing section for re-roll forming the surface of the threaded portion of the screw cut to a predetermined length by the cutting edge.

9. The method of claim 8, wherein the finishing portion has a height greater than a main-forming section of the thread-forming portion.
